# EUROPEAN PATENT SPECIFICATION

(11) **EP 2 734 676 B1**
(45) Date of publication and mention of the grant of the patent: **13.04.2016**
(21) Application number: 11746631.8
(22) Date of filing: 18.07.2011
(51) Int. Cl.: E02B 15/04

(54) **DEVICE AND METHOD FOR COLLECTING POLLUTING SUBSTANCES**
VORRICHTUNG UND VERFAHREN ZUR SCHADSTOFFSAMMLUNG
DISPOSITIF ET PROCEDE PERMETTANT DE COLLECTER DES SUBSTANCES POLLUANTES

(43) Date of publication of application: 28.05.2014
(73) Proprietor: Honitech S.r.l., 20036 Meda (MB) (IT)
(72) Inventor: BERTINI, Paolo, 22024 Lanzo d'Intelvi (CO) (IT)
(86) International application number: PCT/IB2011/053185
(87) International publication number: WO 2012/011040

(56) References cited:
- US-A- 3 476 246
- US-A- 3 850 807
- US-A- 3 936 377
- US-A- 5 149 443
- US-A- 5 472 597

## Description

The invention relates to a device and a method for collecting polluting substances, in particular for collecting hydrocarbons floating on stretches of fresh water or on stretches of sea water, which enables the water-hydrocarbons ratio to be drastically reduced in removing operations. Among the various operations for which the device is suitable, it is particularly suitable for being used when even serious events or incidents occur that can cause ecological disasters, or other general emergency situations. The device according to the invention can also be used for collecting liquids or substances that are produced and poured into the sea during washing of ships or maritime plants. An example of a known device for removing polluting substances is shown in US-A-5,149,443.

One object of the invention is to improve the known devices for collecting polluting substances, in particular hydrocarbons.

A further object of the invention is to provide a device that has extremely high collecting capacity, that is thus able to recover enormous quantities of polluting substances very rapidly until they have all been completely detected, when floating in a defined zone, and also enable the polluting substances to be preventing from spreading or expanding to affect further zones of the surface of the water.

A still further object of the invention is to provide a device that is at the same time simple and cheap to build, easy to control and manage both manually and automatically and which requires very little maintenance.

A still further object of the invention is to provide a device that is highly effective and at the same time less costly and easier to transport than waste-collection ships. A still further object of the invention is to provide a device and a method that enable the polluting substances to be collected selectively and very efficiently and effectively by minimising or even completely avoiding the removal of water.

Owing to the invention, defined by a device according to claim 1 and a method according to claim 12, it is possible to remedy all the previously mentioned drawbacks of the prior art.

The invention can be better understood and implemented with reference to the attached drawings, which illustrate some embodiments thereof by way of non-limiting example, in which:

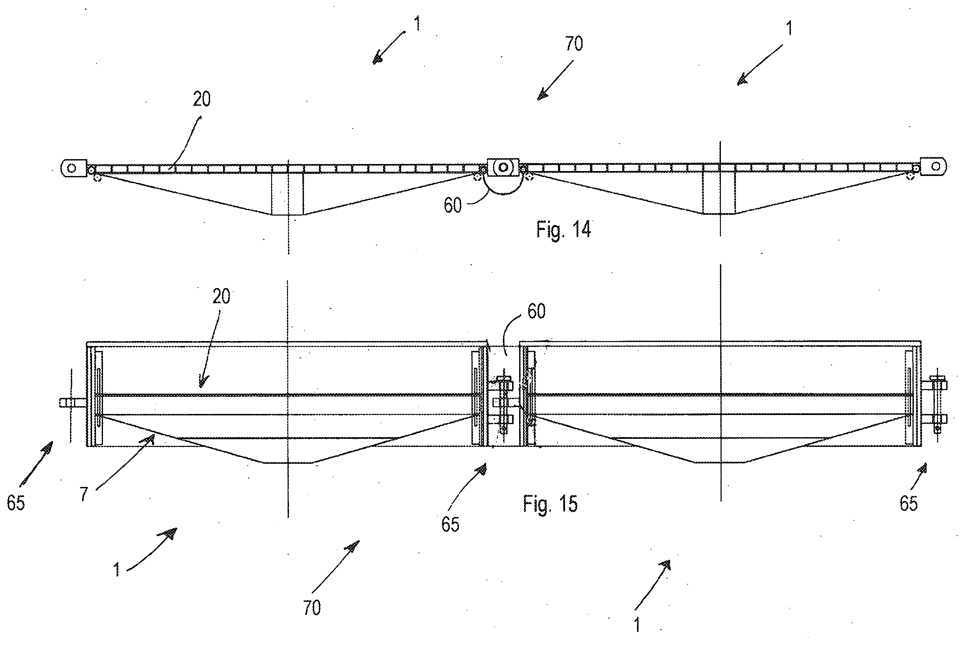

Figures 1-18: embodiment not part of the invention
   Figure 1 is a schematic perspective view of a first embodiment of the collecting device according to the invention;
Figure 2 is a further schematic perspective view of the embodiment in Figure 1 of the collecting device according to the invention;
Figure 3 is a rear view of the collecting device in the embodiment in Figure 1;
Figure 4 is a front view of the collecting device in the embodiment in Figure 1;
Figure 5 is a side view of the collecting device in the embodiment in Figure 1, showing that removing occurs only when a thickness T of a polluting layer S is such as to reduce drastically or even completely prevent the removal also of water.
Figures 6 and 7 are respectively front and top views of a portion of the collecting device, in particular of a portion for the mutual coupling of several collecting devices;
Figures 8 and 9 are respectively frontal and top views of a further portion of the collecting device, in particular possible protection elements for level sensor means;
Figure 10A is a side view of the advancing device, in which the increase in the thickness T of a polluting layer is noted that is due to the elative motion between the device and fluid, this phenomenon being able to be obtained also wit the device in a stationary position but posted along a fluid current moving in relation thereto;
Figure 10B is a side view of a version of the device advancing, in an operating condition that is similar to that of Figure 10A;
Figures 11 and 12 are respectively frontal and top views of an element included in the collecting device that is usable in connecting the latter to a further collecting device according to the invention;
Figure 13 is a schematic view of a further portion of the collecting device;
Figures 14 and 15 are respectively top and front views of a pair of collecting devices according to one version and which are mutually connected;
Figure 16 shows schematically a series of collecting devices that are mutually connected and positioned in the sea;
Figure 17 is a schematic top view of a collecting system that comprises a plurality of collecting devices according to the invention that are connected together and dragged by nautical movement means;
Figure 18 is an enlarged view of part of the system in Figure 17, in which the plurality of collecting devices are shown that are mutually connected according to the invention;
Figures 19-24: improved embodiment part of the invention;

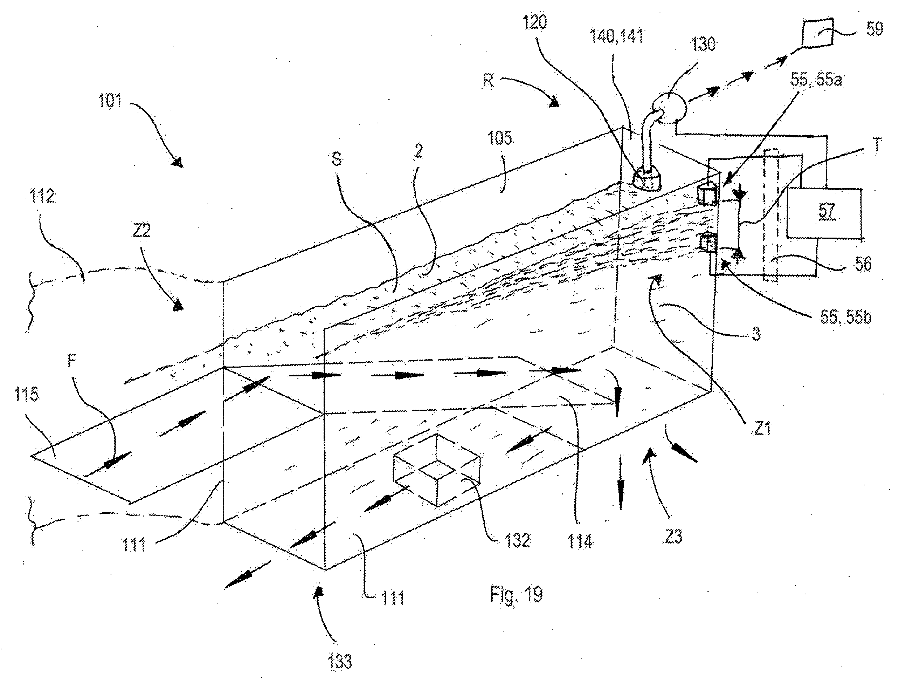

   Figure 19 is a perspective schematic view of an improved embodiment of a device for collecting small quantities of polluting substances according to the invention, in which it is shown how the device, before the removal, retains the polluting substances and releases water, forming a thickness T that permits selective suction of only the polluting substances;

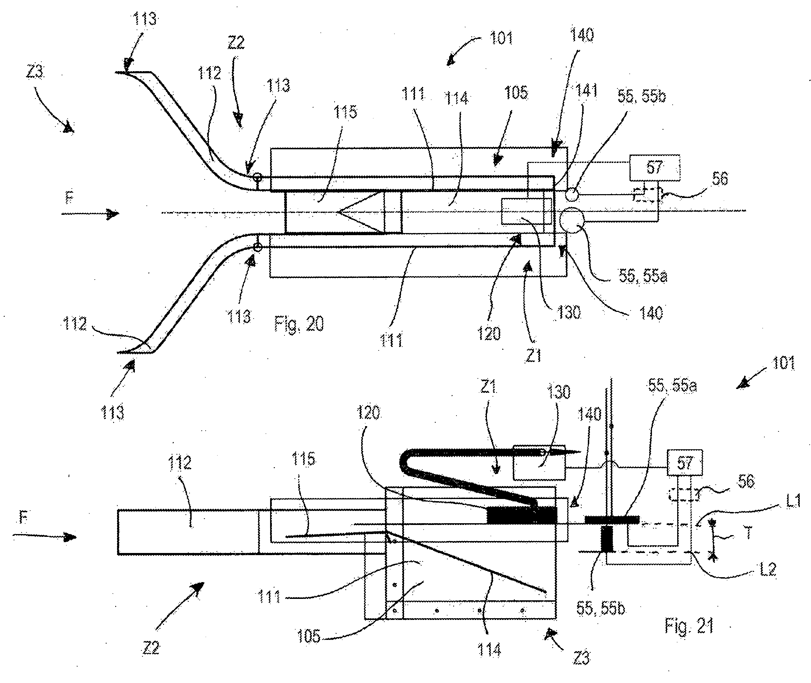

Figure 20 is a top view of the improved embodiment of a device for collecting polluting substances according to the invention;
Figure 21 is a side view of the improved embodiment of a device for Figure 20;

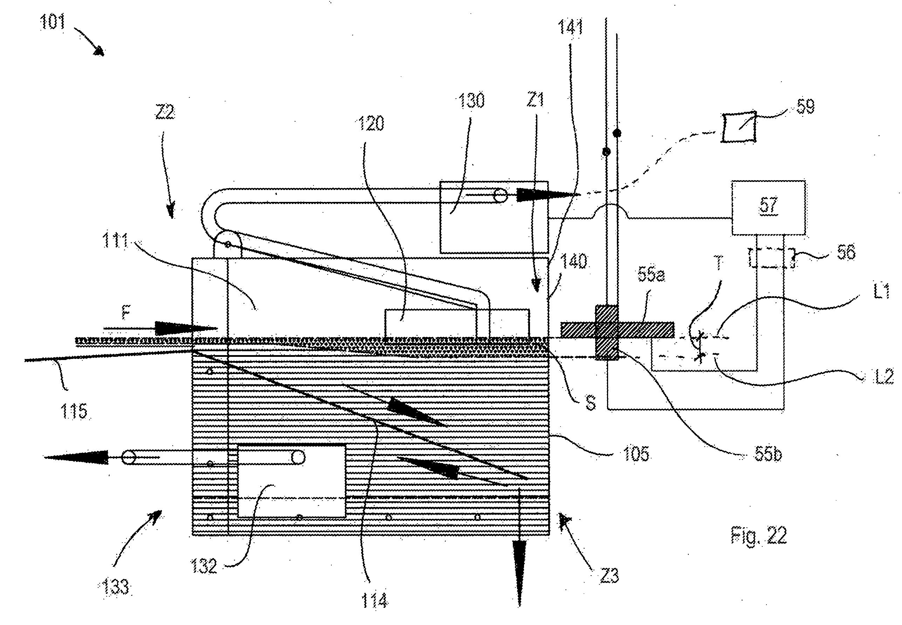

Figure 22 shows schematically the improved embodiment of a device in a first operating step;

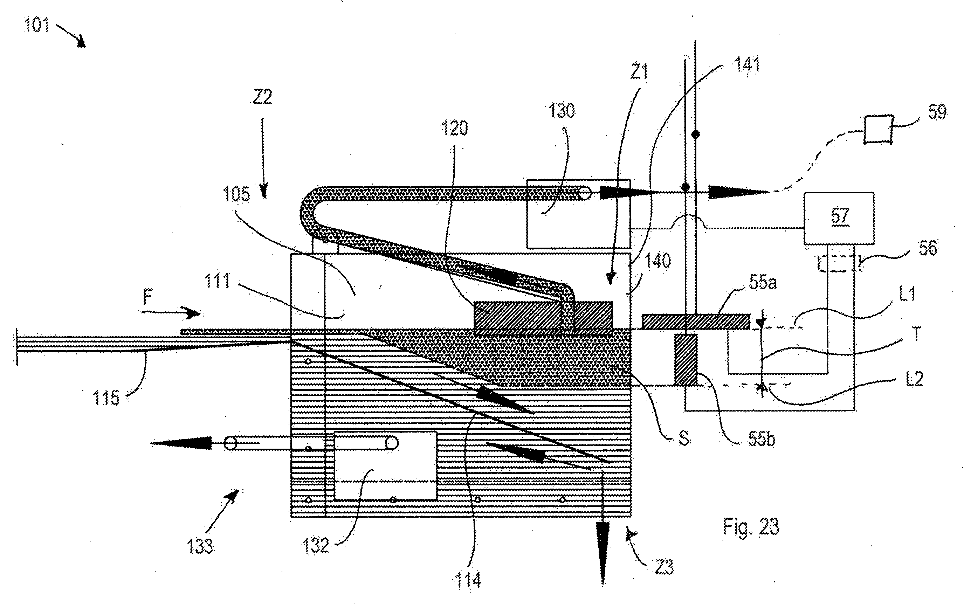

Figure 23 shows schematically the improved embodiment of a device in a second operating step;

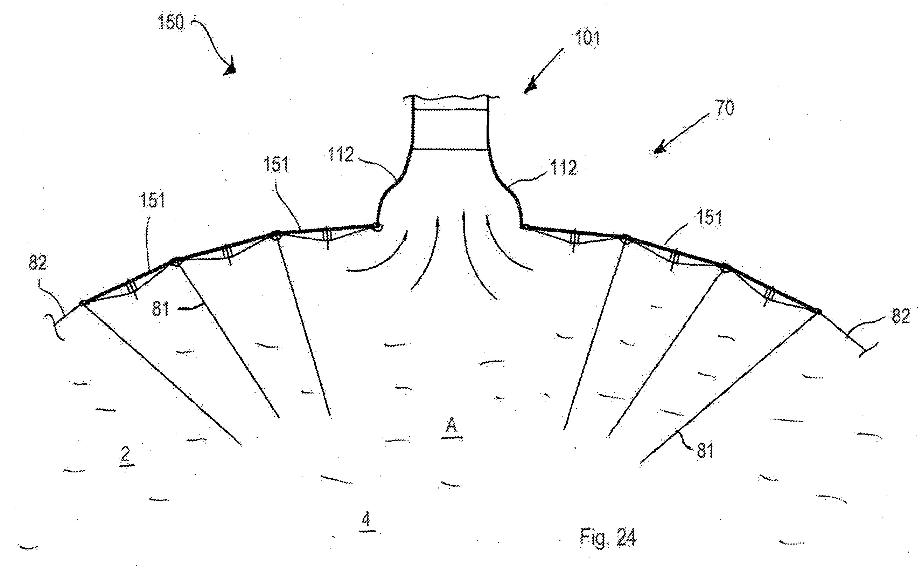

Figure 24 is a fragmentary and schematic top view of a collecting system that comprises a plurality of barriers that are mutually connected and linked to the improved embodiment of a device according to the invention.

With reference to the attached figures, there is shown a device 1 for collecting polluting substances 2, in particular for collecting hydrocarbons 2, or crude oil, floating on a fluid 3, such as water, in particular on stretches 4 of fresh water or sea water or of rivers. The device 1, amongst the various applications for which it is suitable, is particularly suitable for being used when even serious events or accidents occur that may cause ecological disasters, or in other general emergency situations.

The device 1 can also be used to collect liquids or substances that are produced and poured into the sea during washing of the ships or maritime plant.

A possible application of the device 1 is disclosed below if it is necessary to recover polluting substances 2, in this case hydrocarbons, that have, for example, escaped from a plant or from a tanker owing to an accident and have poured into the sea. The polluting substances 2 float on the surface of the water, occupying an area A that has to be cleaned by the device 1 or a plurality of devices 1 depending on the case, as will be seen in detail below.

The device 1 comprises a collecting structure 7, defining internally a collecting chamber for the polluting substances 2.

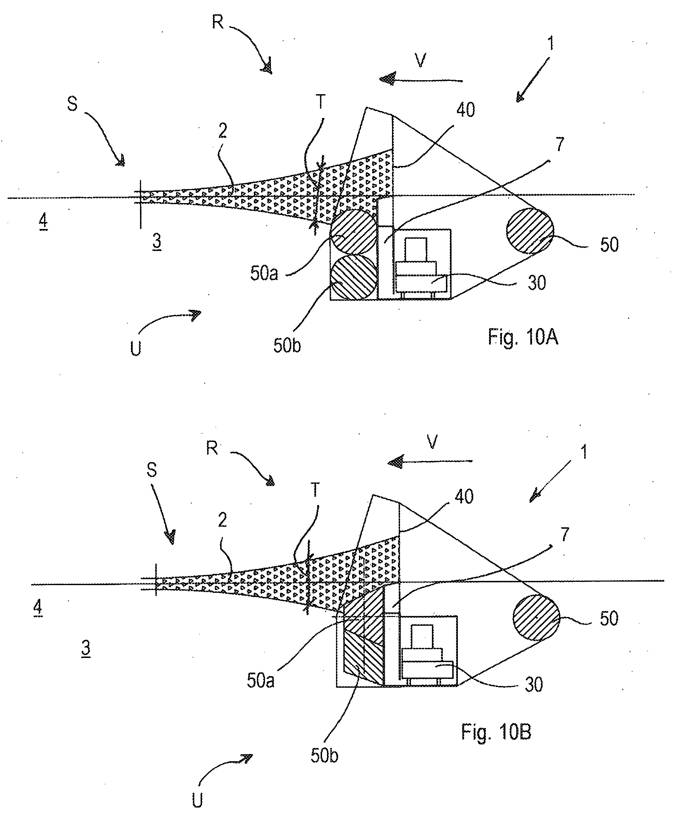

In particular, the collecting structure 7 can comprise a hollow body 5 defining internally a collecting cavity 6 for the aforesaid polluting substances 2. The device 1 is configured for being placed on the stretch of water 4 in such a manner that the hollow body 5, during use, is substantially immersed in water, such as to interact with the polluting substances 2 contained in the area A affected. The device 1 is positioned in such a manner as to reach a perimeter zone P of the area A. The perimeter zone P bounds the area A and thus separates a dirty zone, shown by the area A, from a clean zone B. The polluting substances 2, in this case hydrocarbons, having a density, or volume mass, that is less than that of sea water, or of fresh water, float on the latter, defining a polluting layer S having a thickness T that may vary according to circumstances. As will be seen further on, when the device 1 is moved by a nautical means of transport, the thickness T of the polluting layer S increases near the device 1, due to the fact that the polluting substances 2 gather more near thereto owing to an effective barrier, as visible in the figures 10A, 10B. The same increase in thickness T also occurs when the device 1, which is not necessarily dragged, is placed on a zone traversed by a water course, for example in a river. In the case of waters that are not in movement, and with the device of the invention in a stationary position, it is possible to establish near the device 1 a flow of fluid on which the polluting substances float, by resorting to a pumping system, as will be clearer below from the description of a possible form of implementation of the device according to the invention.

The phenomenon of a local increase in the thickness of the polluting layer S owing to the barrier effect, as will be seen in detail further on, it is exploited to perform more effective collection of the polluting substances 2 by avoiding removal also of water, thus making the collecting operations more selective and thus efficient and rapid. As will be seen below, removing the polluting substances 2 can be activated only when the thickness T of the polluting layer S reaches a set value Vs, which can be chosen in a suitable manner on a case-by-case basis. In particular, removing the polluting substances 2 can be activated only when the thickness T of the polluting layer S, which is measured by suitable sensors, reaches a set value Vs that is desired and which can be programmed according to the circumstances of use. Activating and interrupting the action of removing and pumping the polluting substances is conducted continuously by means of feedback control of a pumping system, as will be detailed further on.

For areas to be cleaned that are very great, it is possible to use a system, disclosed better below, that is defined by several mutually connected devices 1, such as to obtain a chain structure that is able to surround a vast zone affected by the polluting substances 2.

A more detailed description of various parts included in the device 1 now follows.

In one non-limiting embodiment, the hollow body 5 comprises an oblong body, in particular a tubular body. The tubular body extends in such a manner as to have a greater longitudinal dimensions than one or more transverse dimensions. The tubular body is configured in such a manner that a longitudinal axis thereof, during use, is substantially parallel to the surface of the sea, or to a plane on which the polluting layer S substantially lies.

The hollow body 5 can anyway have multiple geometrical shapes. For example, the hollow body 5 can be part of the barriers or can be positioned quite near the latter to benefit from the retaining effects of the polluting substances and thus of the thickening of a polluting layer. In other words, the hollow body 5 can be projected by adopting a desired and suitable geometry that is chosen in order to meet determined requirements and/or in function of special needs and/or intended uses.

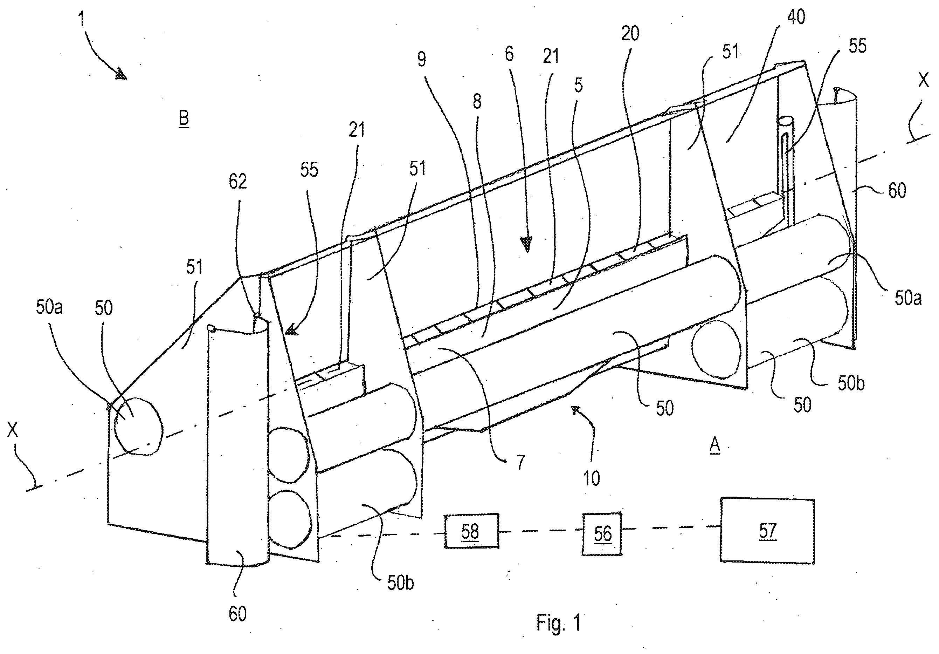

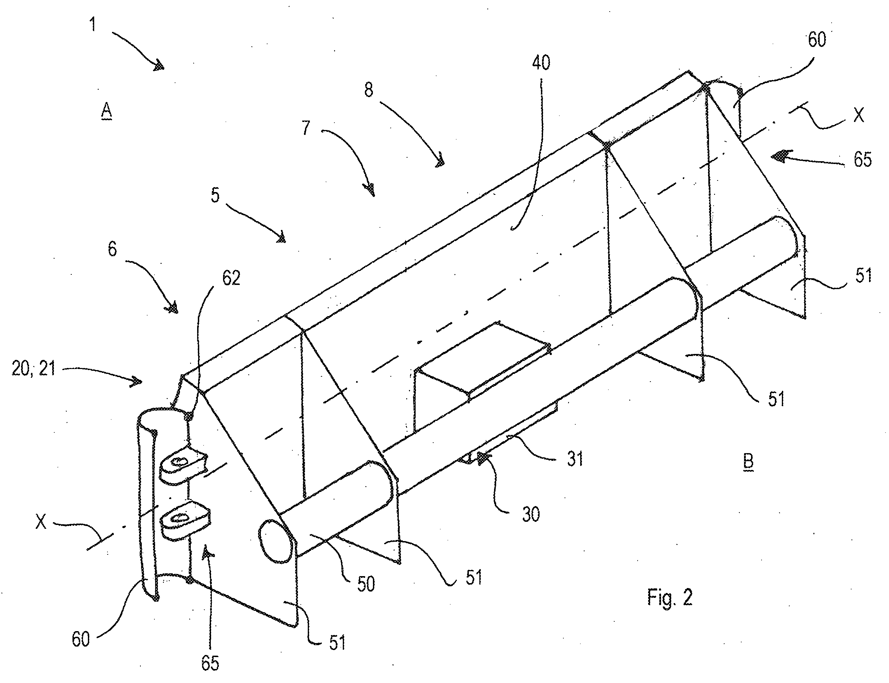

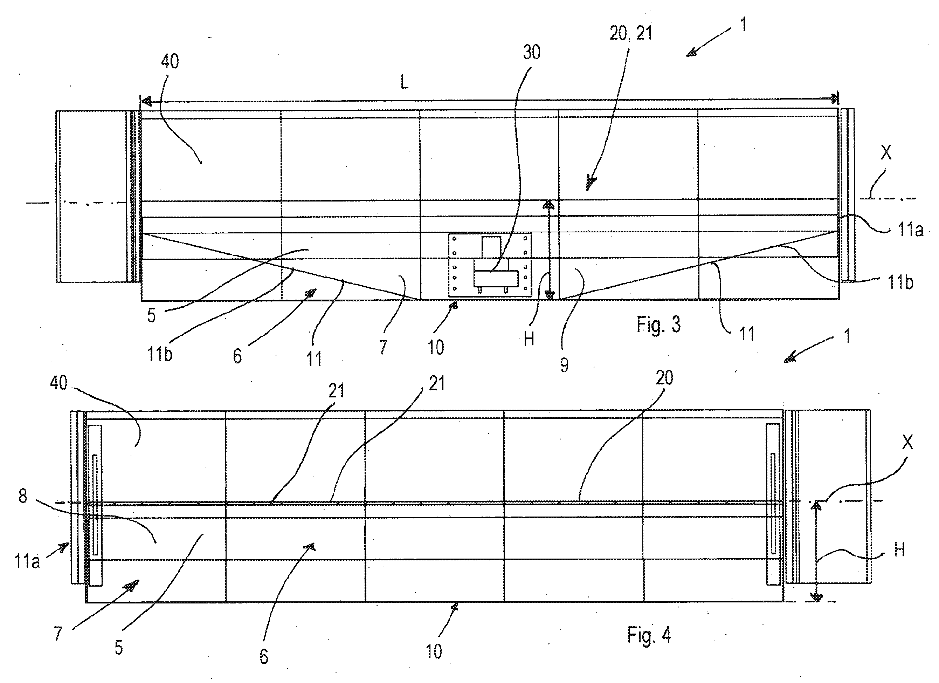

In the non-limiting embodiment disclosed here with reference to the attached figures, in particular to figures 1 to 5, the collecting structure is shaped in such a manner as to define a box structure 7. The box structure 7, in non-limiting manner, has a geometrical shape having rather a big longitudinal dimension compared with a further cross section. In particular, the box structure 7 extends along a longitudinal direction X for a length L that is greater than a height H of the box structure 7, as visible in Figures 3 and 4.

The box structure 7 comprises a first wall 8 that during use is oriented to the area A to be cleaned and is in a position that is substantially orthogonal to the surface of the fluid. The first wall 8, during the operations, is touched by the polluting layer S.

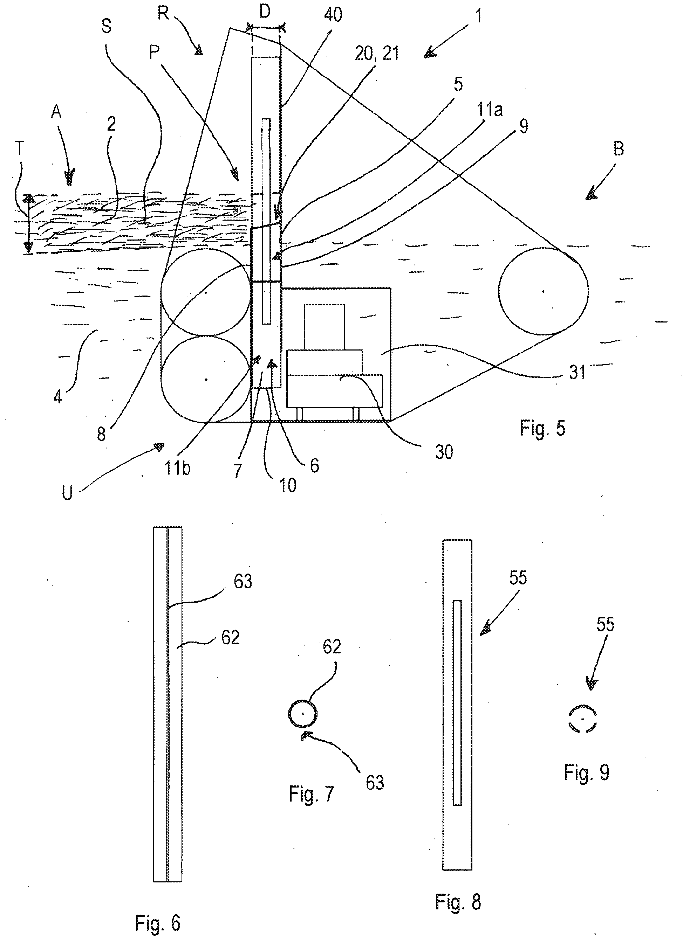

The box structure 7 comprises a second wall 9, which is substantially parallel to the first wall 8 and is spaced apart from the latter by a distance D, as shown better in Figure 5.

The box structure 7 is further bound below by a bottom wall 10, and laterally by a pair of side walls 11. Each of the side walls 11 comprises a first portion 11a that is substantially orthogonal to the longitudinal direction X, and a second portion 11b, arranged in a tilted manner, connecting the first portion 11a to the bottom wall 10. The first wall 8, the second wall 9, the bottom wall 10 and the side walls 11 together bound the collecting cavity 6.

The hollow body 5, in this case the box structure 7, comprises an inlet portion 20 that extends parallel to the longitudinal direction X and which, during use, is intended for being about parallel to the surface of the stretch 4 of water. On the inlet portion 20 an opening 21 is obtained that enables or a plurality of openings 21 are obtained that enable the polluting substances 2 to enter the collecting cavity 6 for collecting the polluting substances 2. In an embodiment that is not shown, a single opening 21 is provided that extends in an elongated manner substantially on the entire inlet portion 20.

In the non-limiting embodiment disclosed with reference to figures 1 to 10B, there is provided a plurality of openings 21 one next to the other aligned on one another along the inlet portion 20.

The opening/s 21 can be anyway shaped and positioned on the inlet portion 20 according to the methods that are desired.

The inlet portion, as better visible in Figure 5, lies on a plane that is parallel to the longitudinal direction X but tilted with respect to the free surface of the stretch 4 of water. In particular, this plane extends in a descending manner from the side of the area A and in an ascending manner from the side of the clean zone B. The tilt of the inlet portion 20 is such as to favour the entry of the polluting substances 2 into the openings 21 and thus into the box structure 7 or hollow body 5.

The device 1 comprises an immersion pump 30, that pumps the polluting substances 2 received into the collecting cavity 6, to a suitable storage/treatment unit 59, by means of a delivery conduit.

The pump 30 can be supplied electrically, for example at 220-230 volt, by a supply cable that is connected to a source of electric power that is locatable on a nautical means of transport.

The pump 3 is located in a suitable housing seat 31 of the device 1.

The device 1 is provided with a barrier element 40 for diking the polluting layer S and promoting the collection of the polluting substances 2 in the collecting cavity 6. In other words, the barrier element 40 is configured for diking and directing the polluting substances 2 in the collecting structure 7.

The barrier element 40 extends from the collecting structure 7 in such a manner as to occupy, during operation, at least one region R placed above the collecting.structure 7.

In particular, the barrier element 40 extends from the collecting structure 7 in such a way as to be, during operation, above the surface of the fluid 3 above the polluting substances 2.

The barrier element 40 extends partially also to a further region U placed below the inlet portion 20, or to the collecting structure 7, in order to stabilise the device 1 better in the presence of hydrodynamic thrusts.

The barrier element 40 is fixed to the collecting structure 7, in particular it is applied to the second wall 9. In one version, the second wall 9 is part of the barrier element 40 and the latter extends substantially parallel to the first wall 8. In other words, the barrier element 40 is positioned parallel to the longitudinal direction X.

The barrier element 40 projects from the hollow body 5, or from the box structure 7 upwards and beyond the inlet portion 20 by an amount that can be chosen in a desired manner provided it is suitable for performing a diking action on the polluting layer S. Part of the barrier element 40 can project also below the hollow body 5, as well as upwards, in order to balance the hydrodynamic thrusts acting on the device 1.

The collecting structure 7 can be configured in such a manner as to be able to be fixed removably to the barrier element 40 at a preset position or height, which can be adjusted in such a manner as to adapt better to different operating conditions and to the type of area A to be cleaned.

Owing to the barrier element 40, the polluting substances 2 are prevented from expanding or widening out to affect further zones of the surface of the water. In other words, the barrier element 40 restricts the polluting layer in the area A, preventing the polluting layer reaching the clean area B, the latter having already benefited from the cleaning action of collecting of the polluting substances 2 by the device 1.

The device 1 is provided with floating elements 50 that exert a hydrostatic thrust upwards in a suitable manner, as specified below. The floating elements comprise first floating elements 50a, which are designed to exert a floating thrust of a preset fixed value, and second floating elements 50b configured for exerting in a controlled manner a floating thrust having a value that is variable according to the circumstances of use. In particular, the second floating elements 50b enable the effect of floating on the device 1 to be controlled, in other words they act to arrange the device 1 in the water in such a manner that the inlet portion 20 is correctly positioned at the polluting layer S. This enables as great quantity as possible of polluting substances, i.e. hydrocarbons 2, and as small a quantity of water, or even not water to be collected in a very focussed and effective manner. In particular, a pair of first floating elements 50a is provided that are placed on opposite sides with respect to the hollow body 5, and extending parallel to the longitudinal direction X. The first floating elements 50a, in non-limiting manner, have a cylindrical tubular shape, but can have other desired shapes. In the embodiment disclosed with reference to the attached figures, there are two second floating elements 50b, they are both arranged on the same side with respect to the collecting structure 7 and can also be managed independently of one another. Each of the second floating elements 50b extends parallel to the longitudinal direction X for a portion that is less than the length L of the collecting structure 7. In particular, the second floating elements 50b have a volumetric capacity that is less than that of the first floating elements 50a. In all manners, the number and position of the second floating elements 50b can be different from what is disclosed, in function of set application requirements/needs.

The first floating elements 50a and the second floating elements 50b can have, in one non-limiting embodiment as shown in figure 10b, geometries so as to promote the advance through fluid mechanics, in the direction indicated by the arrow V, of the device 1, possibly also enabling the polluting substances 2 to be directed more effectively to the collecting structure 7.

During operation, the second floating elements 50b are filled in such a manner as to contain a desired and precise ratio between water and air in order to vary in a controlled manner the floating thrust exerted by the water and air. The second floating elements 50b enables the degree of immersion and the setup of the device 1 in water to be regulated. Owing to the second floating elements 50b, it is possible to set the device 1 in function of the thickness T of the polluting layer S in order to operate in an optimised manner.

The first floating elements 50a and the second floating elements 50b can be supported and connected to the collecting structure 7 and/or the barrier element 40 by shutter element means 51 arranged transversely to the longitudinal direction X. The shutter elements 51 also act as a structural reinforcement for the device 1.

The device 1 can comprise sensors 55 for measuring the water levels and the polluting layer S, in such a manner as to provide a signal indicating the thickness T of the polluting layer S. In particular, a pair of sensors 55 are provided that are arranged at opposite ends of the hollow body 5, which enable a more accurate value of the thickness T of the polluting layer S to be obtained. This is very useful for periodically monitoring the thickness T also for detecting the variations thereof due to a speed change of the device 1 during dragging performed by nautical movement means or caused by the current of the river or of the sea, in which the value of the thickness T can be influenced.

A receiving/transmitting unit 56 configured for sending the level signals supplied by the sensors 55 to a processing and control unit 57, and for receiving command signals from the latter can be included in the device 1.

The processing and control unit 57 is configured for receiving signals indicating one or more operating parameters of the device 1, and for processing the aforesaid signals for consequently commanding the device 1. In particular, the processing and control unit 57 is configured for driving the pump 30, by a feedback control mode, according to the value of the thickness T of a polluting layer S that is determined by the level sensor means 55. More precisely, as disclosed in detail further on, the processing and control unit 57 is configured for driving the pump 30 for removing hydrocarbons, in feedback control mode, according to the value of the thickness T of a polluting layer S that is measured by the difference in values by a first sensor 55a that is able to detect a first level L1 of the hydrocarbons, and by a second sensor 55b that is suitable for detecting a second level L2 of the water below the hydrocarbons. The pump 30 for removing hydrocarbons is activated only when the thickness T of a polluting layer S is greater than or the same as a set value Vs that is programmable in a desired manner.

The processing and control unit 57, in one possible operating mode, starts up the pump 30 only when the value of the thickness T reaches a desired preset value Vs and stops the suction and pumping action when the thickness T decreases excessively, in particular below the aforesaid value Vs. In this manner, the risk of removing a fraction of water together with the polluting substances 2 is minimised or even completely avoided. Owing to this configuration, it is possible to have an a priori selection of the polluting substances 2 to be removed, i.e. a preventive selection upstream, i.e. even before starting the removal operation, unlike what occurs in prior-art system, in which, as there is no preventive removal, in addition to the polluting substances large quantities of water are also removed, which then impose laborious subsequent operations for processing and separating the water from the already removed hydrocarbons, thus making the operations not very efficient, very laborious, complex and costly.

The transmitting unit 56 and the processing and control unit 57 can be configured for communicating together by cables or with wireless technology.

The processing and control unit 57, via feedback control mode, sends a command to a driving unit 58 that enables the floating action provided by the second floating elements 50b to be varied. In particular, the second floating elements 50b are emptied or filled partially or totally with part of the fluid 3 so as to vary the weight and therefore the upward thrust thereof that they supply to the device 1. The driving unit 58 uses compressed air, which is supplied, via a flexible conduit, by an air compressor located on a nautical means of transport. By injecting compressed air and expelling fluid 3 from the second floating elements 50b the driving unit 58 enables the second floating elements 50b to be lightened by increasing the upward hydrostatic thrust thereof. Suitable solenoid valve means is provided that is associated with inlet and outlet openings obtained on each floating element 50b. The solenoid valve means enables or prevents, depending on the set operating requirements, air or liquid 3 to be introduced into or expelled from each second floating element 50b.

By acting on the second floating elements 50b it is possible to regulate the degree of immersion and the set-up of the device 1 in the water. Owing to the second floating elements 50b, it is possible to set the device 1 in function of the thickness T of the polluting layer S in order to operate in an optimised manner. In other words, it is possible to vary in a suitable manner the height, specifically the height position of the openings 21 by taking account of the thickness value T supplied by the level sensor means 55. In this manner, the openings 21 can always be positioned in the middle of the polluting layer S in such a manner as to make only the polluting substances 2 drop into the collecting structure 2. In this manner, the selective removal action of only the polluting substances 2 is promoted.

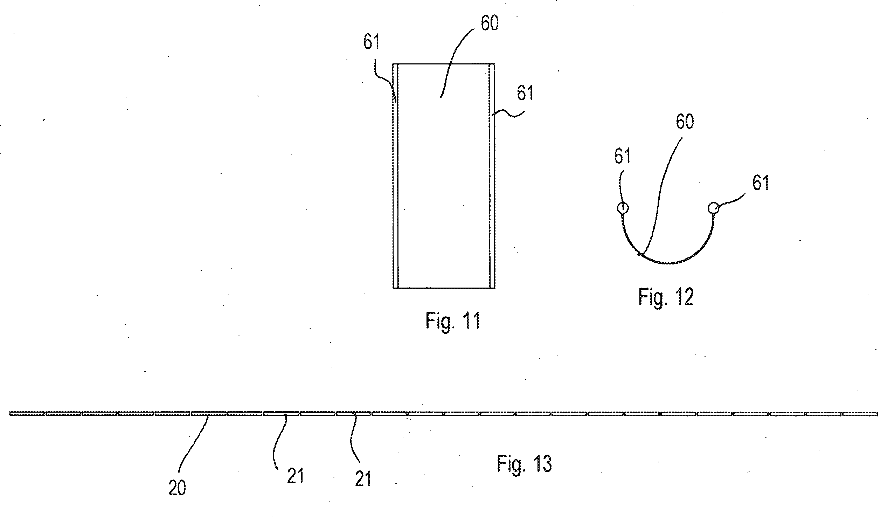

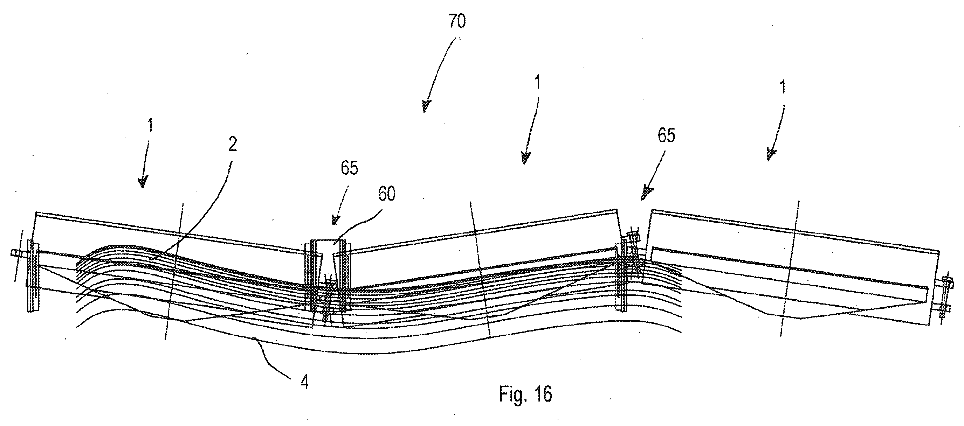

The device 1 is provided with connecting means 65 that permit connecting to a further device 1. In particular, the connecting means 65 is provided at both ends of the device 1 so as to enable the connecting means 65 to be connected to two further devices 1 respectively, so as to define a chain structure 70. The connecting means 65 is configured for permitting degrees of rotational liberty between two adjacent devices, which can thus float in the presence of stress of the fluid 3, as shown schematically in Figure 16. The connecting means 65 can have desired configurations, depending on particular needs and/or requirements to be met. The device 1 can further comprise screen means 60 for diking the polluting substances 2 near the aforesaid connecting means 65, between two adjacent devices 1. The screen means, in one embodiment, comprises a screen element 60, shown better in figures 11 and 12, having a semicylindrical shape that extends along a direction that is substantially orthogonal to the longitudinal direction X and parallel to a plane defined by the barrier element 40. The screen element 60 extends for a length that is substantially equal to the height of the device 1. The screen element 60 is provided on the two longitudinal edges with two oblong coupling portions 61 shaped for being received inside hollow coupling bars 62. On each bar 62 an opening 63 is obtained longitudinally that enables part of the screen element 60 to be inserted but prevents uncoupling of the portions 61. The coupling between the bars 62 and the portions 61 is such as to enable a certain rotation of the screen element 60 with respect to the remaining part of the device 1. Further, the screen element 60 can also be made of a flexible material. The screen element 60 that is thus configured ensures a connection with a certain degree of liberty between the mutually connected devices 1. In this manner it is possible to arranged the chain structure 70 more freely and the stress due to the movement of the fluid 3 and/or due to dragging of the chain structure 70 by possible nautical movement means 80 is absorbed more easily.

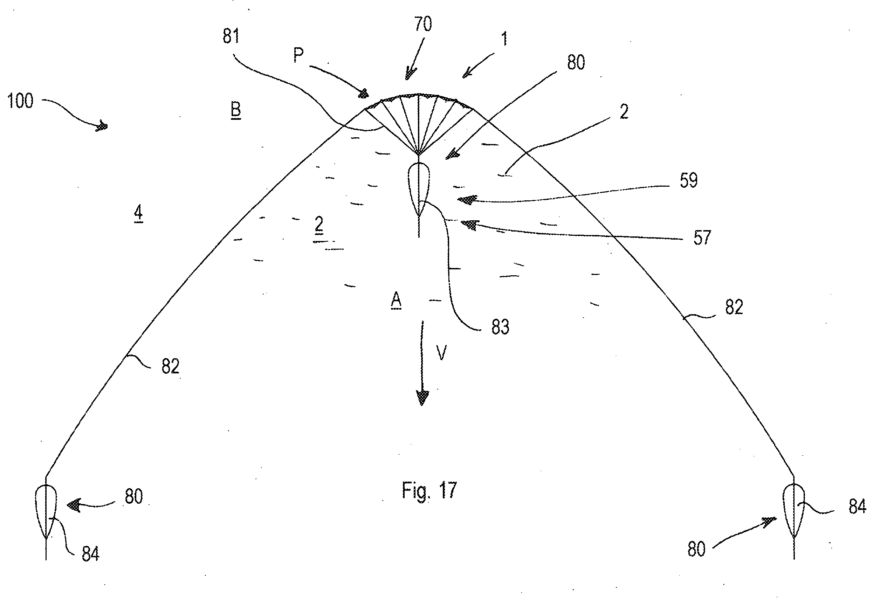

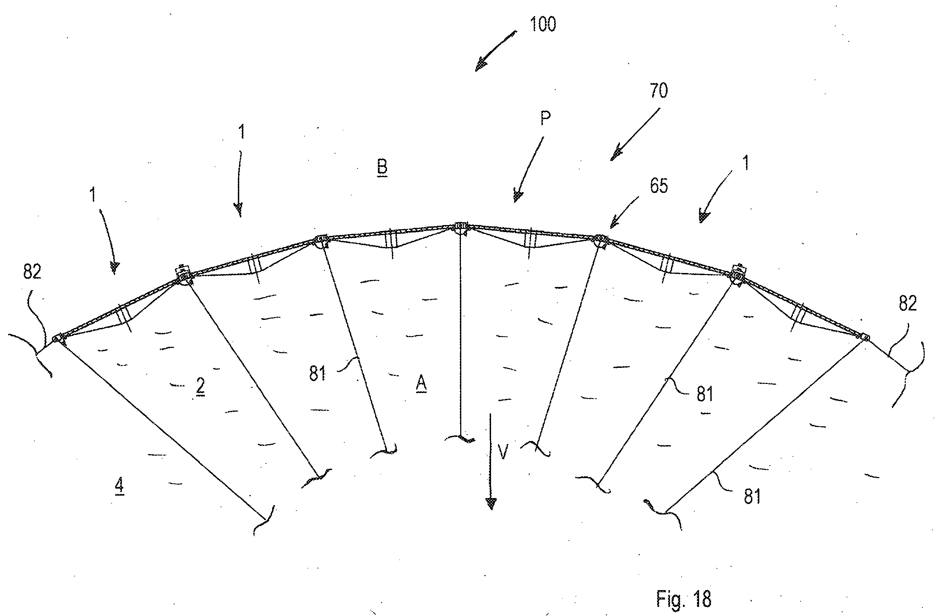

In figures 17 and 18 there is shown a system 100 for collecting polluting substances 2, comprising a plurality of devices 1 according to the invention. The devices 1, in a certain desired number, are mutually connected as already disclosed previously, such as to generate the aforesaid chain structure 70 to bound the area A from which to remove the polluting substances 2. The chain structure 70 is connected on several zones to first towing cables 81 arranged as a dial that are in turn connected to a central towing vessel 83.

The chain structure 70 at the ends thereof is connected to second towing cables 82 that are in turn connected to respective side towing vessels 84.

In one embodiment of the system 100, the ends of the chain structure 70 can be connected to further floating elements of known type for diking the polluting substances, which are in turn connected to the second towing cables 82. On the central towing vessel 83 the processing and control unit 57 and the storage/treatment unit 59 can be arranged. In this configuration, it is possible to provide a sole centralised processing and control unit 57 for controlling in an autonomous and independent manner each of the plurality of devices 1, rather than having one processing and control unit for each single device 1.

The nautical movement means 80, during operation, tows the system 100 by moving to the central zones of area A, as indicated by the advancing arrow V, at a suitable speed, such as progressively to collect the polluting substances 2 via the devices 1, in the modes already disclosed previously. The processing and control unit 57 receives the signals from each transmitting/receiving unit 56 associated with each device 1 by a cable or wireless communication. The processing and control unit 57, on the basis of signals indicating one or more parameters associated with the polluting layer S, for example the thickness T, accordingly commands each driving unit 58 in a suitable mode. In this mode it is possible to command the second floating elements 50b to vary the floating effect in an optimum manner for each device 1, in function of the status or conformation of the polluting layer S zone by zone. Further, the processing and control unit 57, in the manner already disclosed above, in particular starts or stops independently and autonomously the pump 30 of each device 1 in function of the value of the thickness T of the polluting layer S that is measured locally by the level sensor means 55 of each device 1.

In order to clean smaller areas, the system 100 can be configured in such a manner as to provide a single device 1, possibly connected at the end to respective floating dike elements of known type, connected by towing cables to respective side vessels. A central vessel connected to the device 1 can act as a control station on which the processing and control unit 57 is provided. In this case, the processing and control unit 57 can be connected simply by an electric cable to the device 1. The processing and control unit 57 can be configured as a joystick that by commands given in appropriate directions enables the second floating elements 50b to be emptied and filled independently of one another.

With reference to figures 19 to 23, an improved embodiment according to the invention of a collecting device 101 is now disclose, the operating principle of which is similar to the embodiment of the not claimed device 1 disclosed previously. In the description that follows, the device parts 101 that are substantially the same as or similar to the embodiment of the device 1 that has already been disclosed can have the same reference number.

Figure 19 shows schematically this embodiment of the device 101. The device 101 comprises a collecting structure 105, inside which a flow F is made to flow that comprises the fluid 3, such as water, and the floating polluting substances 2. The barrier means 140 is provided that extends, analogously to what has been disclosed for the preceding, embodiment, from the collecting structure or chamber 105 in such a manner as to occupy, during operation, at least one region R placed above the collecting structure 105. The barrier means 140 is arranged for diking, retaining and accumulating the polluting substances 2 in an accumulating and retaining zone Z1.

The device 101 comprises removing pump 130 for evacuating to a suitable storage/treatment unit 59 the collected polluting substances 2. The device 101 comprises a floating removing mouth 120, connected to the pump 130 for removing hydrocarbons, and configured for floating on the polluting layer S. In other words, the floating removing mouth 120 is configured for having the sucking opening placed on the upper surface of the polluting layer S, in such a manner as to enable the pump 130 to remove selectively only the floating polluting substances 2, avoiding the removal also of water below.

As shown better in figures 22 and 23, the device 101 comprises level sensor means 55 for detecting above a first level L1 of the free surface of polluting substances 2 that are lighter and thus floating, and a heavier second level L2 of the fluid 3, in particular water, placed just under the polluting substances 2, in such a manner as to determine the thickness T of a polluting layer S. In particular, the sensor means comprises a first level sensor 55a for detecting the first level L1 of light liquid, in this case hydrocarbons, and a second sensor 55b to detect the second level L2 of heavy liquid, in this case water. The value of the thickness T is obtained through the difference in the values provided by the first sensor 55a and by the second sensor 55b. The first sensor 55a and/or the second sensor 55b are of the floating type, i.e. have respective densities that are such as to enable respectively floating on the polluting layer S and on the water, i.e. substantially on the interface surface between the water and the polluting substances 2 at which the second level L2 is detected. In other words, the first sensor 55a comprises a float having a density that is less than that of the hydrocarbons or polluting substances 2, and consequently also less than that of the density of the water. Otherwise, the second sensor 55b comprises a float having less density than the water but greater density than the density of the hydrocarbons or polluting substances 2 to obtain a floating effect at a height immediately below the polluting layer S, i.e. on the aforesaid interface surface.

Instead of sensors of the floating type, sensors of a different type can also be adopted provided that they are able to provide an indication of the two different levels of the fluid 3 and of the polluting substances 2, in order to determine the thickness T of the polluting layer S.

The device 101 can be used according to a manual operating mode, i.e. an operator can in manual mode activate or less the removal of polluting substances 2 by simply observing the values of the first level L1 and of the second level L2, by evaluating the size of the thickness T of a polluting layer S, and consequently deciding whether or not it is advisable to start or stop the removing pump 130.

The device 101 can be configured for operating totally automatically. In this configuration, the device 101 comprises a processing and control unit 57 that is able to receive signals indicating one or more operating parameters, and is configured for processing these signals for consequently commanding the device 1.

The processing and control unit 57 is configured for driving the pump 130 by a feedback control mode, in function of the value of the thickness T of a polluting layer S that is determined by the level sensor means 55.

The level sensor means 55 and the processing and control unit 57 cooperate in such a manner as to start up the pump 130 when the thickness T of a polluting layer S is greater than or the same as a set value Vs that can be suitably set according to the circumstances in which it operates. The pump 130 is thus started up or stopped with feedback control, according to whether the thickness T is greater, the same or less than the set value Vs. This minimises or even totally eliminates the risk of removing also water together with the polluting substances 2. Owing to the collecting device according to the invention, it is thus possible to perform selective collection of the polluting substances 2 in a more effective, efficient and reliable manner compared with known systems.

A receiving/transmitting unit 56 can be provided for transmitting and receiving signals via a cable or wireless connection between the processing and control unit 57 and the level sensor means 55 and the pump 130.

The geometrical and functional configuration of the collecting device 101 will now be disclosed in greater detail.

The collecting structure 105 is laterally bound by a pair of side walls 111, connected to a barrier wall 141 included in the barrier means 140. Also the side walls 111 act as a dike for retaining the polluting substances 2 in an area inside the box structure 105.

The side walls 111 are connected transversely to the barrier wall 141, and in particular are intended, in operation, to be positioned substantially parallel to the flow advancing direction F, as shown in figures 19 and 20. The side walls 111 act to guide and dike the polluting substances 2 in such a manner as to promote the approach thereof to the barrier wall 141, i.e. in the accumulating and retaining zone Z1. To the side walls 111 respective deviating or entry walls 112 are connected, shown in figures 20 and 21, which have the function of conveying and guiding the flow F inside the collecting structure 105. Deviating walls 112 extend from the side walls 111 in a direction opposite the barrier wall 141, and are intended for being positioned substantially orthogonally to the free surface of the stretch of water. Deviating walls 112 are thus placed near an inlet zone Z2 for the flow F inside the collecting structure 105. Deviating walls 112, as are visible, in Figure 20, open in such a manner as to define a wider entry zone Z3 compared with the inlet zone Z2, in such a manner as to direct the floating polluting substances 2 towards the inside of the collecting structure 105. Deviating walls 112 have an "S"-formed plan shape with end portions 113 intended, during operation, to touch the flow direction F. This geometrical configuration is very effective in terms of fluid mechanics profile and enables the turbulence phenomena to be significantly reduced that create an emulsion by mixing hydrocarbons and water.

In the collecting structure 105 a first ramp wall 114 is provided that extends between the two side walls 111. The first ramp wall 114 is tilted in a descending manner from the inlet zone Z2 towards the accumulating and retaining zone Z1. A second ramp wall 115 is provided that acts as a conveyor located upstream of the first ramp wall 114, or more distant form the barrier wall 141 and tilted in an ascending manner with respect to an approach direction towards the accumulating and retaining zone Z1. The first ramp wall 114 and the second ramp wall 115 enables the polluting substances 2 inside the collecting structure or chamber 105 to be successfully guided to the accumulating and retaining zone Z1. In particular the second ramp wall 115 is intended to be positioned just below the polluting layer S and is tilted in such a manner as to encourage the entry of the polluting substances 2 and the subsequent advancing thereof to the accumulating and retaining zone Z1. The first ramp wall 114 is on the other hand tilted in such a way as to guide the fluid 3, in this case water devoid of hydrocarbons, to an evacuating zone for being expelled to outside the collecting structure 10. The evacuating zone can comprise an opening zone Z3, placed near a lower zone of the barrier wall 141. In this case, during operation, the fluid 3, through the effect of the natural current to which it is subjected, or through the effect of the towing movement to which the device 101 is subjected, or through the effect of both, descends to the opening zone Z3 to then move away from the collecting structure 105, whilst the polluting substances 2, which are lighter than the fluid 3, float and are accumulated and retained by the barrier wall 141 cooperating with the side walls 111.

The particular geometrical configuration, and specifically, the first ramp wall 114, the second ramp wall 115, and the deviating or entry walls 112, enable significant results on the fluid mechanics of the device 101 to be obtained, consequently noticeably increasing the operations of conveying and collecting the polluting substances 2 with significantly reduced or even absent turbulent phenomena caused by the detachment of fluid jets and emulsion phenomena. In particular, the positive effects in terms of fluid mechanics obtained with the first ramp wall 114 and with the second ramp wall 115 are further appreciable, especially in the cases of a very thin polluting layer S, i.e. in the case of iridescence phenomena.

In one possible version, the device 101 comprises a further pump 132, shown in figures 19, 22, 23, which has the function of facilitating the evacuation of the clean fluid 3 from the collecting structure 105 and encouraging the entry into the collecting structure of the polluting substances 2. Thus, whilst the pump 130 has the function of sucking via the floating removing mouth 120 only the polluting substances 2 located on top of the water, the further pump 132 has the function of both attracting the flow F inside the collecting structure 105 and expelling the clean water to outside the collecting structure 105. In this case, if both the stretch of water and the device 101 are in a stationary condition, it is the further pump 132 that causes the corresponding approaching motion of the polluting substances 2 to the accumulating and retaining zone Z1. When the device is towed and/or when the fluid 3 is already provided with natural approaching movement to the barrier wall 141, the use of the further pump 132 enables a synergic effect to be obtained to the advantage of the operations of removing the polluting substances 2.

The further pump 132 is located in a zone in such a manner as not to suck the polluting substances 2, thus at a certain distance from the polluting substances 2. When in function, the further pump 132, through the sucking effect, resucks into the collecting structure 105 the fluid 3 or water that thus drags with the polluting substances 2, and subsequently expels only the water devoid of hydrocarbons to outside the collecting structure of chamber 105. Figures 22 and 23 show schematically how thickening of the polluting layer S evolves, in particular near the accumulating zone Z1 by means of the corresponding approaching motion between the polluting substances 2 and the collecting structure 105 and owing to the barrier effect of the latter.

Once the water has entered the collecting structure 105, can be expelled through an expulsion opening 133. The device 101 can comprise the expulsion opening 133, or the opening zone Z3 or both.

The improved embodiment of a collecting device 101 can be used in combination with barrier elements to make the operations of collecting the polluting substances more effective, in a similar manner to what is disclosed for the collecting system 100 comprising the embodiment of the device 1 as shown in figures 17 and 18.

In particular, as shown in figure 24, it is possible to connect several barrier elements 151 to both sides of the collecting device 101, in particular to the deviating wall 112, such as to make conveying of the polluting substances 2 to inside the collecting device 101 even more effective. From what has been disclosed, it appears clear that the device according to the invention is structurally very simple and cheap to make and manage and enables the polluting substances to be collected selectively and very efficiently and effectively, minimising or even totally avoiding water removal.

## Claims

1. Device for collecting polluting substances (2), in particular hydrocarbons, floating on a fluid (3), in particular water, comprising in combination:
a collecting structure (105) for said polluting substances (2),said collecting structure (105) comprising an inlet zone (Z2) for a flow (F) of said fluid (3) and of said polluting substances (2), and an accumulation and retaining zone (Z1) for the accumulation of said polluting substances (2);
barrier means (140, 141) for diking and directing said polluting substances (2) in said collecting structure (105), said barrier means (140, 141) extending from said collecting structure (105) in such a manner as to occupy, during operation, at least one region (R) placed above said collecting structure (105);
wall means (112, 114, 115) for conveying and guiding said flow (F) inside said collecting structure (105);
level sensor means (55, 55a, 55b) for detecting the surface level of said fluid (3) and of said polluting substances (2) to determine a thickness (T) of a polluting layer (S);
a processing and control unit (57) able to receive signals indicating one or more operating parameters of said device (101), and configured for processing said signals for consequently commanding said device (101);
a floating removing mouth (120) positioned at the accumulation and retaining zone (Z1) and configured for floating on said polluting layer (S) such as to remove selectively only said polluting substances (2) and not said fluid (3);
pump means (130) connected to the floating removing mouth (120) for evacuating the polluting substances (2);
wherein said wall means comprises a first ramp element (114) arranged inside said collecting structure (105) and tilting in a descending manner from said inlet zone (Z2) towards said accumulating and retaining zone (Z1), and a second ramp element (115) located upstream of said first ramp element (114) and intended, during operation, to be tilted in an ascending manner with respect to an advancing direction of said flow (F).

2. Device according to claim 1, whereby the pump means (130) evacuates to a storage/treatment unit (59) the polluting substances (2) that are received in said collecting structure (105), said processing and control unit (57) being configured for driving said pump means (130), by a feedback control mode, depending on said thickness (T) of a polluting layer (S) determined by said level sensor means (55, 55a, 55b).

3. Device according to claim 2, wherein said level sensor means (55, 55a, 55b) and said processing and control unit (57) cooperate in such a manner as to start up said pump means (130) when said thickness (T) is greater than or the same as a set value (Vs).

4. Device according to any one of claims 1 to 3, wherein said level sensor means (55) comprises a first sensor (55a) and a second sensor (55b) arranged for detecting separately respectively an upper surface level (L1) of said polluting substances (2) and a lower level (L2) of said fluid (3) immediately below said polluting substances (2), in such a manner as to detect, through a difference in level values, said thickness (T) of a polluting layer (S).

5. Device according to claim 4, wherein said first sensor (55a) and/or said second sensor (55b) are configured for acting separately and independently of one another and are of the floating type.

6. Device according to any preceding claim, further comprising a receiving/transmitting unit (56) configured for sending, via a cable or wireless connection, the level signals supplied by said sensor means (55, 55a, 55b) to said processing and control unit (57), and for receiving command signals from said processing and control unit (57).

7. Device according to any of claims 1 to 6, wherein said wall means comprise a pair of entry walls (112) to promote the entry of said flow (F) to said collecting structure (105), said entry walls (112) extending, during operation, substantially orthogonally to the free surface of said fluid (3) and being "S"-shaped to minimise turbulent fluid-mechanics phenomena and consequent emulsion phenomena.

8. Device according to any preceding claim, further comprising further pump means (132) arranged for evacuating to the outside the fluid (3) contained inside said collecting structure (105) and for promoting the accumulation of said polluting substances (2) near said barrier means (40; 140, 141), said further pump means (132) being configured for acting at a certain distance from said polluting layer (S).

9. Device according to claim 2, further comprising conduit means for conveying said polluting substances (2) from said collecting structure (105) to said storage/treatment unit (59).

10. Device according to any of the preceding claims provided wit barrier elements (151) positioned on both sides of the collecting device (101) and conveying the polluting substances (2) towards the inside of the collecting device (101).

11. Method for collecting polluting substances (2), in particular hydrocarbons, floating on a fluid (3), in particular water, by means of a device according to any of claims 1 to 10 comprising the steps of:
diking and accumulating said polluting substances (2) in an accumulating and retaining zone (Z1),
detecting, in said accumulating and retaining zone (Z1), an upper surface level (L1) of said polluting substances (2) and a lower level (L2) of said fluid (3), immediately below said polluting substances (2), such as to measure a thickness (T) of a polluting layer (S) at said accumulating and retaining zone (Z1),
starting the removal of said polluting substances (2) only when said thickness (T) is greater than or the same as a set and programmable value (Vs).

12. Method according to claim 11, wherein said removal occurs via a floating suction mouth (120) that floats on the upper surface of said polluting layer (S).

13. Method according to any one of claims 11 or 12, wherein exploiting relative approaching motion between said polluting substances (2) and barrier means ( 140, 141) is provided to thicken locally said polluting layer (S).

14. Method according to claim 13, wherein said corresponding motion is generated by towing said barrier means (140, 141) to regions occupied by said polluting substances (2).

## Patentansprüche

1. Vorrichtung zum Sammeln verunreinigenden Substanzen (2), insbesondere Kohlenwasserstoffe, schwimmend auf einer Flüssigkeit (3), insbesondere von Wasser, in Kombination umfassend:
eine Sammelstruktur (105) für die verunreinigenden Substanzen (2), wobei die Sammelstruktur (105), eine Einlasszone (Z2) für eine Strömung (F) der Flüssigkeit (3) und der genannten Substanzen (2) und ein Akkumulation und Rückhaltezone (Z1) für die Akkumulation der genannten umweltschädlichen Substanzen (2) umfasst;
Sperrmittel (140, 141) zum Eindeichen und Leiten des verunreinigenden Substanzen (2) in die Sammelstruktur (105), wobei die Sperrmittel (140, 141), ragen von der Sammelstruktur derart aus, dass sie im Betrieb ein Bereich (R) oberhalb die Sammelstruktur (105) belegen;
Wandmittel (112, 114, 115) zum Transportieren und Führen der Strömung (F) innerhalb der Sammelstruktur (105);
Niveausensoreinrichtung (55, 55a, 55b) zum Erfassen der Oberflächenpegel der Flüssigkeit (3) und der genannten Substanzen (2) um eine Dicke (T) von einem Schmutzschicht (S) zu bestimmen;
eine Verarbeitungs- und Steuereinheit (57) in der Lage Signale zu empfangen, die einen oder mehrere Betriebsparameter der Vorrichtung (101) zeigen und die genannten Signale zur Steuerung der Vorrichtung (101) zu verarbeiten;
eine schwimmende, entfernende Mündung (120) angeordnet in der Akkumulation und Rückhaltezone (Z1), die zum Schwimmen auf die Schmutzschicht (S) konfiguriert ist, sodass nur die verunreinigenden Substanzen (2) und nicht die Flüssigkeit (3) selektiv entfernt werden;
Pumpmittel (130) angeschlossen an die schwimmende entfernende Mündung (120) zum Abführen der verunreinigenden Substanzen (2);
wobei das Wandmittel ein erstes Rampenelement (114) umfasst, angeordnet in der genannten Sammelstruktur (105) und kippend gestaltet absteigend von der Einlasszone (Z2) in Richtung der Akkumulation und Rückhaltezone (Z1) und ein zweites Rampenelement (115 ), der stromaufwärts von dem ersten Rampenelement (114) angeordnet ist und dazu bestimmt ist, im Betrieb, in aufsteigender Weise in Bezug auf eine Vorschubrichtung der Strömung (F) gestaltet zu sein.

2. Vorrichtung nach Anspruch 1, wobei das Pumpmittel (130) zu eine Speicher / Behandlungseinheit (59) die verunreinigenden Substanzen (2) auspumpt, die in die Sammelstruktur (105) empfangen werden, wobei die Verarbeitungs- und Steuereinheit (57) konfiguriert ist zum Steuern des Pumpmittels (130), durch ein Rückkopplungssteuermodus in Abhängigkeit von der Dicke (T) von einem Schmutzschicht (S), bestimmt durch die Niveausensoreinrichtung(55, 55a, 55b).

3. Vorrichtung nach Anspruch 2, wobei die Niveausensoreinrichtung (55, 55a, 55b) und die Verarbeitungs- und Steuereinheit (57) zusammenwirken, sodass das Pumpmittel (130) aktiviert wird, wenn die Dicke (T) größer als oder gleich wie ein bestimmter Wert (Vs) ist.

4. Vorrichtung nach einem der Ansprüche 1 bis 3, wobei die Niveausensor einrichtung (55) einen ersten Sensor (55a) und einen zweiten Sensor (55b) umfasst zum Erfassen jeweils getrennt einen oberen Oberflächenniveau (L1) des verunreinigenden Substanzen (2) und eine untere Oberflächenniveau (L2) der Flüssigkeit (3) unmittelbar unterhalb der verunreinigenden Substanzen (2), in einer solchen Weise, um zu erfassen, durch den Niveaudifferenz-Wert, die Dicke (T) der Schmutzschicht (S).

5. Vorrichtung nach Anspruch 4, wobei der erste Sensor (55a) und / oder der zweite Sensor (55b) schwimmend gestaltet sind und separat und unabhängig voneinander gestaltet sind.

6. Vorrichtung nach einem der vorhergehenden Ansprüche, ferner umfassend eine Empfangs / Sendeeinheit (56) gestaltet zum Senden, über ein Kabel oder eine drahtlose Verbindung, die Niveausignale geliefert von der Sensoreinrichtung (55, 55a, 55b) zur Verarbeitungs- und Steuer Einheit (57) und zum Empfangen von Befehlssignalen von der Verarbeitungs- und Steuereinheit (57).

7. Vorrichtung nach einem der Ansprüche 1 bis 6, wobei die Wandmittel ein Paar von Eintrittswände (112) umfassen, um den Eintritt der Strömung (F) in die Sammelstruktur (105) zu fördern, die Eintrittswände (112) strecken sich, im Betrieb, orthogonal zu der freien Oberfläche der Flüssigkeit (3) und sind "S" -förmig gestaltet, um Turbulenz und damit Emulsionserscheinungen zu minimieren.

8. Vorrichtung nach einem der vorhergehenden Ansprüche, die ferner mit einer weiteren Pumpeinrichtung (132) ausgestattet ist, zum abpumpen nach Aussen der Flüssigkeit (3) enthalten innerhalb des Sammelstruktur (105) und zur Beschleunigung der Anreicherung der genannten Substanzen (2) in der Nähe des Sperrmittel (40; 140, 141), wobei die weitere Pumpeinrichtung (132) zum einem bestimmten Abstand von der Schmutzschicht (S) arbeitet.

9. Vorrichtung nach Anspruch 2, ferner umfassend eine Leitungseinrichtung zum Befördern der verunreinigenden Substanzen (2) von der Sammelstruktur (105) zu dem Speicher / Behandlungseinheit (59).

10. Vorrichtung nach einem der vorhergehenden Ansprüche die mit Sperrelemente (151) auf beiden Seiten der Vorrichtung (101) versehen ist, zum befördern der verunreinigenden Substanzen (2) zum Inneren der Vorrichtung (101).

11. Verfahren zum Sammeln verunreinigenden Substanzen (2), insbesondere Kohlenwasserstoffe, schwimmend auf einer Flüssigkeit (3), insbesondere von Wasser, mittels einer Vorrichtung nach einem der Ansprüche 1 bis 10, umfassend die Schritte:
Eindeichung und Akkumulation der verunreinigenden Substanzen (2) in einer Akkumulation- und Rückhaltezone (Z1),
Erfassen, in der Akkumulation- und Rückhaltezone (Z1), einer oberen Oberflächenniveau (L1) der Schadstoffe (2) und eine untere Oberflächenniveau (L2) der Flüssigkeit (3), unmittelbar unterhalb der umweltschädlichen Substanzen (2), in einer solchen Weise, um zu erfassen, die Dicke (T) der Schmutzschicht in der Akkumulation- und Rückhaltezone (Z1),
Starten der Entfernung der verunreinigenden Substanzen (2) nur dann, wenn die Dicke (T) größer oder gleich einer bestimmter Wert (Vs) ist.

12. Verfahren nach Anspruch 11, wobei die Entfernung erfolgt über ein schwimmende, entfernende Mündung (120), die auf der oberen Oberfläche der Schmutzschicht (S) schwimmt.

13. Verfahren nach einem der Ansprüche 11 oder 12, wobei die relative Annäherungsbewegung zwischen dem genannten Substanzen (2) und Sperrmittel (140, 141) ausgenutzt wird, um lokal die Schmutzschicht (S) zu verdicken.

14. Verfahren nach Anspruch 13, wobei die entsprechende Bewegung durch Schleppen der Sperrmittel (140, 141), auf Bereiche von dem Substanzen (2) belegten Oberflächen erzeugt wird.

## Revendications

1. Dispositif pour collecter des substances polluantes (2), en particulier des hydrocarbures, flottant sur un fluide (3), en particulier de l'eau, comprenant en combinaison:
une structure de collecte (105) pour lesdites substances polluantes (2), ladite structure de collecte(105) comprenant une zone d'entrée (Z2) pour un flux (F) dudit fluide (3) et de lesdites substances polluantes (2), et une zone d'accumulation et de retenue (Z1) pour l'accumulation desdites substances polluantes (2);
moyens de barrière (140, 141) pour endiguer et diriger lesdites substances polluantes (2) dans ladite structure de collecte (105), ledit moyen de barrière (140, 141) se prolongeant à partir de ladite structure de collecte (105) de manière à occuper, au cours de fonctionnement, au moins une région (R) placé au-dessus dudit structure de collecte(105);
moyens de paroi (112, 114, 115) pour transporter et guider ledit flux (F) à l'intérieur de ladite structure de collecte (105);
moyens de détection de niveau (55, 55a, 55b) pour détecter le niveau de surface dudit fluide (3) et desdites substances polluantes (2) pour déterminer une épaisseur (T) d'une couche polluante (S);
une unité de traitement et de commande (57) apte à recevoir des signaux indiquant un ou plusieurs paramètres de fonctionnement dudit dispositif (101), et configuré pour traiter lesdits signaux pour commander en conséquence ledit dispositif (101);
une bouche flottante de ablation (120) positionné au niveau de la zone d'accumulation et de retenue (Z1) et configuré pour flotter sur ladite couche polluante (S) de manière à éliminer sélectivement les substances polluantes et pas ledit fluide (3).;
moyen de pompage (130) connecté à la bouche flottante (120) pour évacuer les substances polluantes (2);
dans lequel ledit moyen de paroi comprend un premier élément de rampe (114) disposée à l'intérieur de ladite structure de collecte(105) et d'inclinaison descendante à partir de ladite zone d'entrée (Z2) vers ladite zone d'accumulation et de retenue (Z1), et un deuxième élément de rampe (115) situé en amont dudit premier élément de rampe (114) et destiné, en fonctionnement, à être incliné de manière ascendante par rapport à une direction d'avance dudit flux (F).

2. Dispositif selon la revendication 1, dans lequel le moyen de pompage (130) évacue vers une unité de stockage / traitement (59) les substances polluantes (2) qui sont reçus dans ladite structure de collecte(105), ledit unité de traitement et de commande (57) étant configuré pour commander ledit moyen de pompage (130), par un mode de commande de rétroaction, en fonction de ladite épaisseur (T) de la couche polluant (S) déterminé par lesdits moyens de détection de niveau (55, 55a, 55b).

3. Dispositif selon la revendication 2, dans lequel lesdits moyens de détection de niveau (55, 55a, 55b) et ledit unité de traitement et de commande (57) coopèrent de telle manière à actionner ledit moyen de pompage (130) lorsque ladite épaisseur (T) est supérieure ou égale à une valeur de consigne (Vs).

4. Dispositif selon l'une quelconque des revendications 1 à 3, dans lequel ledit moyen de détection de niveau (55) comprend un premier capteur (55a) et un second capteur (55b) disposé pour détecter séparément, respectivement, un niveau de surface supérieure (L1) desdites substances polluantes (2) et un niveau inférieur (L2) dudit fluide (3) juste au-dessous desdites substances polluantes (2), de manière à détecter, par une différence de valeurs de niveau, ladite épaisseur (T) d'une couche polluante (S).

5. Dispositif selon la revendication 4, dans lequel ledit premier capteur (55a) et / ou ledit deuxième capteur (55b) sont configurés pour agir séparément et indépendamment l'un de l'autre et sont du type flottant.

6. Dispositif selon l'une quelconque des revendications précédentes, comprenant en outre une unité recevoir/transmetteur (56) configurée pour transmettre, par l'intermédiaire d'un câble ou d'une connexion sans fil, les signaux de niveau fournis par ledit moyen de détection (55, 55a, 55b) audite unité de traitement et de commande (57), et pour recevoir des signaux de commande provenant de ladite unité de traitement et de commande (57).

7. Dispositif selon l'une quelconque des revendications 1 à 6, dans lequel lesdits moyens de paroi comprennent une paire de parois d'entrée (112) pour favoriser l'entrée dudit flux (F) dans ladite structure (105) de collecte, lesdites parois d'entrée (112) se prolongeant, pendant le fonctionnement, sensiblement orthogonalement à la surface libre dudit fluide (3) et étant en forme de «S» pour minimiser les turbulences et les phénomènes d'émulsion qui en découlent.

8. Dispositif selon l'une quelconque des revendications précédentes, comprenant en outre d'autres moyens de pompage (132) agencée pour évacuer à l'extérieur le fluide (3) contenu à l'intérieur de ladite structure de collecte (105) et pour la promotion de l'accumulation desdites substances polluantes (2) en proximité des moyens de barrière (40; 140, 141), lesdits autres moyens de pompage (132) étant configurés pour agir à une certaine distance de ladite couche (S) polluante.

9. Dispositif selon la revendication 2, comprenant en outre un conduit pour transporter lesdites substances polluantes (2) de ladite structure de collecte (105) à ladite unité de stockage / traitement (59).

10. Dispositif selon l'une quelconque des revendications précédentes pourvu des éléments de barrière (151) positionnés sur les deux côtés du dispositif de collecte (101) et transportant les substances polluantes (2) vers l'intérieur du dispositif de collecte (101).

11. Procédé pour la collecte des substances polluantes (2), en particulier des hydrocarbures, flottant sur un liquide (3), en particulier de l'eau, au moyen d'un dispositif selon l'une quelconque des revendications 1 à 10, comprenant les étapes suivantes:
endiguement et accumulation des substances polluantes (2) dans une zone d'accumulation et de retenue (Z1),
détection, dans ladite zone d'accumulation et de retenue (Z1), d'un niveau de surface supérieure (L1) desdites substances polluantes (2) et d'un niveau inférieur (L2) dudit fluide (3), immédiatement au-dessous desdites substances polluantes (2), de sorte à mesurer une épaisseur (T) d'une couche polluante (S) au niveau de ladite zone d'accumulation et de retenue (Z1),
initier le retrait dudites substances polluantes (2) seulement lorsque ladite épaisseur (T) est supérieure ou égale à une valeur programmable et fixé (Vs).

12. Procédé selon la revendication 11, dans lequel ladite suppression a lieu par l'intermédiaire d'une bouche d'aspiration flottante (120) qui flotte sur la surface supérieure de ladite couche polluant (S).

13. Procédé selon l'une quelconque des revendications 11 ou 12, dans lequel on exploite le mouvement relatif entre lesdites substances polluantes (2) et un moyen de barrière (140, 141) pour épaissir localement ladite couche (S) polluante.

14. Procédé selon la revendication 13, dans lequel ledit mouvement correspondant est généré par le remorquage des barrières (140, 141) sur régions occupées par des substances polluantes (2).
